# EUROPEAN PATENT APPLICATION

(11) **EP 3 002 618 A1**
(43) Date of publication of application: **06.04.2016**
(21) Application number: 14190378.1
(22) Date of filing: 24.10.2014
(51) Int. Cl.: G02B 6/42

(54) **Apparatus for transmitting and receiving light signal using optical waveguide**

(30) Priority: 02.10.2014 KR 20140133142
(71) Applicant: Raytron Co. Ltd, Daejeon 305-380 (KR)
(72) Inventor: Lee, Hyun Young, Daejeon (KR); Jeong, Cheol Min, Daejeon (KR)
(74) Representative: Greenaway, Martin William

(57) **Abstract**

Provided is an apparatus for transmitting and receiving light signals. The apparatus includes an optical waveguide (100) having one end and another end, a sensor unit (200) including an infrared sensor (210) for detecting an infrared signal and outputting a corresponding electrical signal, an ambient light sensor (220) for detecting ambient light and outputting a corresponding electrical signal, and a light-emitting device (230), a lighttight housing (300) for blocking out external light and in which the other end and the sensor unit (200) are installed, and a controller (400) for receiving an electrical signal output from at least one of the infrared sensor (210) and the ambient light sensor (220) and controlling the light-emitting device (230). The one end of the optical waveguide (100) is optically connected to a first lens (110) for collecting the ambient light and the infrared signal, so that the optical waveguide (100) applies the collected ambient light and infrared signal to the sensor unit (200) through the other end. The optical waveguide (100) collects light emitted by the light-emitting device (230) through the other end and provides the light to the one end to show the light emitted by the light-emitting device (230) to an outside of the apparatus through the first lens (110).

## Description

### CROSS-REFERENCE TO RELATED APPLICATION

This application claims priority to and the benefit of Korean Patent Application No. 10-2014-0133142, filed on October 02, 2014, the disclosure of which is incorporated herein by reference in its entirety.

### BACKGROUND

### 1. Field of the Invention

The present invention relates to an apparatus for transmitting and receiving light signals using an optical waveguide.

### 2. Discussion of Related Art

Although some of existing remote controllers, etc. use radio frequency bands, most of them use an infrared communication method of emitting and receiving infrared rays for communication. According to the infrared communication method, an infrared emitting device emits light of information conforming to a predetermined protocol, and the light is received by an infrared sensor and converted into the information by a predetermined decoder.

In products, such as a television (TV), a monitor, a Blu-ray player, a digital versatile disc (DVD) player, or a computer, that can be controlled by a user with a remote controller based on infrared communication, an infrared communication module including an infrared sensor for receiving an infrared signal provided by the remote controller and a light-emitting device for indicating that an infrared signal has been received is installed.

There is a current trend toward reducing the weights, the thicknesses, the lengths, and the sizes of image display devices, such as a TV. In other words, efforts are being made to reduce the width of a bezel surrounding a display unit on which an image is displayed, and such products are dominating the market. Such devices are also controlled with infrared remote controllers. Since an infrared receiver module including an infrared sensor, a light-emitting device, etc. is embodied in a printed circuit board (PCB) and installed into a bezel, a reduction in the width of the bezel is limited, and also a reduction in the overall thickness of a display is limited. Further, a signal line and a power line should be provided to a video board that is a main board, so that manufacturing processes and manufacturing costs increase.

### SUMMARY OF THE INVENTION

The present invention is directed to reducing the thickness of a product controlled with infrared rays, particularly, narrowing the bezel of an image display device, and also reducing manufacturing processes and manufacturing costs.

According to an aspect of the present invention, there is provided an apparatus for transmitting and receiving light signals, the apparatus including: an optical waveguide having one end and another end; a sensor unit including an infrared sensor configured to detect an infrared signal and output an electrical signal corresponding to the infrared signal, an ambient light sensor configured to detect ambient light and output an electrical signal corresponding to the ambient light, and a light-emitting device; a lighttight housing configured to block out external light, and in which the other end and the sensor unit are installed; and a controller configured to receive an electrical signal output from at least one of the infrared sensor and the ambient light sensor and control the light-emitting device. The one end of the optical waveguide is optically connected to a first lens for collecting the ambient light and the infrared signal, so that the optical waveguide applies the collected ambient light and infrared signal to the sensor unit through the other end. The optical waveguide collects light emitted by the light-emitting device through the other end and provides the light to the one end to show the light emitted by the light-emitting device to an outside of the apparatus through the first lens.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a schematic diagram of an apparatus for transmitting and receiving light signals according to an exemplary embodiment of the present invention;
FIGS. 2A and 2B are diagrams schematically showing exemplary implementations of an optical path changing member;
FIG. 3 schematically shows exemplary implementations of a second lens;
   and
FIGS. 4A and 4B are diagrams schematically showing a period in which a controller receives an electrical signal from an ambient light sensor and a period in which the controller provides the electrical signal to a light-emitting device.

### DETAILED DESCRIPTION OF EXEMPLARY EMBODIMENTS

Since descriptions of the present invention are just embodiments for structural or functional description, the scope of the present invention should not be interpreted to be limited to the exemplary embodiments disclosed below. In other words, since exemplary embodiments can be changed in various ways and have various forms, the scope of the present invention should be understood to include equivalents that can embody the technical spirit of the present invention.

Meanwhile, the terms used herein should be understood as follows. It will be understood that, although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of the present invention. It will be understood that when an element is referred to as being "on" or "above" another element, it can be directly on the other element or intervening elements may be present. On the other hand, when an element is referred to as being "in contact with" another element, there are no intervening elements. Other expressions for describing the relationship between elements, i.e., "interposed" and "directly interposed," "between" and "directly between," or "adjacent to" and "directly adjacent to," should be interpreted in a similar manner.

As used herein, the singular forms "a," "an," and "the" are intended to include the plural forms as well, unless the context clearly indicates otherwise. It will be further understood that the terms "comprise," "comprising," "include," and/or "including," when used herein, specify the presence of state features, integers, steps, operations, elements, components, and/or combinations thereof but do not preclude the presence or addition of one or more other features, integers, steps, operations, elements, components, and/or combinations thereof.

In the drawings referred so as to describe exemplary embodiments of the present invention, the sizes, heights, and thicknesses of elements are intentionally exaggerated for convenience of description and easy understanding and are not enlarged or reduced according to a ratio. Also, an element in the drawings may be intentionally reduced, and another element in the drawings may be intentionally enlarged.

Unless otherwise defined, all terms used herein have the same meaning as commonly understood by those of ordinary skill in the art to which the present invention pertains. It will be further understood that terms, such as those defined in commonly used dictionaries, should be interpreted as having a meaning that is consistent with their meaning in the context of the related art and will not be interpreted in an idealized or overly formal sense unless expressly so defined herein.

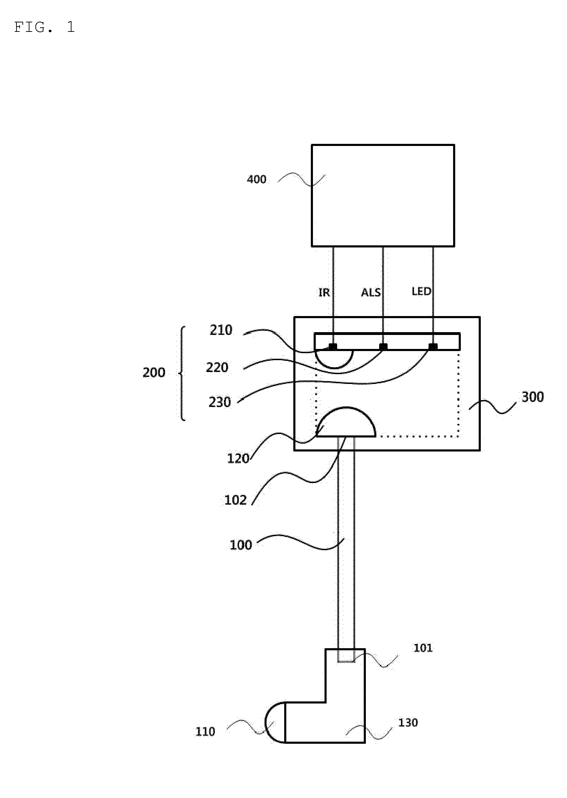

Hereinafter, exemplary embodiments of the present invention will be described with reference to the accompanying drawings. FIG. 1 is a schematic diagram of an apparatus for transmitting and receiving light signals according to an exemplary embodiment of the present invention. Referring to FIG. 1, an apparatus for transmitting and receiving light signals may include an optical waveguide 100, a sensor unit 200, a lighttight housing 300, and a controller 400.

The optical waveguide 100 has one end 101 and another end 102. The one end 101 of the optical waveguide 100 is optically connected to a first lens 110 that collects an infrared signal and ambient light, and provides the infrared signal and the ambient light to an infrared sensor 210 and an ambient light sensor 220 through the other end 102 of the optical waveguide 100. In an exemplary embodiment, the optical waveguide 100 may include an optical fiber, and light incident on any one end of the optical waveguide 100 undergoes total internal reflection (TIR) and is transmitted to the other end.

The first lens 110 collects ambient light and an infrared signal that is provided through a remote controller (not shown) by a user to control an electronic device, and provides the ambient light and the infrared signal to the sensor unit 200 via the optical waveguide 100. In an exemplary embodiment, when the apparatus for transmitting and receiving light signals according to this exemplary embodiment is used in a television (TV), the first lens 110 is deployed at a position where it is easy to collect ambient light and an infrared signal provided by the user in an environment including the TV. As an example, the first lens 110 may be deployed in a bezel (not shown) to project out. As another example, the first lens 110 may be inserted in a bezel not to project out in view of its appearance. These are mere examples, and the first lens 110 may also be a convex lens embodied as a Fresnel lens. The first lens 110 may be any lens capable of collecting ambient light and an infrared signal provided by the user.

In an exemplary embodiment, the light collected by the first lens 110 is transmitted to the one end 101 of the optical waveguide 100 via an optical path changing member 130. The optical waveguide 100 may be embodied as a transparent optical fiber. When the optical waveguide 100 is bent to a predetermined radius of curvature or less, the optical waveguide 100 may break, or the material of the optical waveguide 100 may be degraded, so that the optical transmission characteristic may deteriorate. Therefore, the path of the ambient light and the infrared signal collected by the first lens 110 is changed by the optical path changing member 130, so that the ambient light and the infrared signal may be provided to the one end 101 of the optical waveguide 100 connected to the optical path changing member 130.

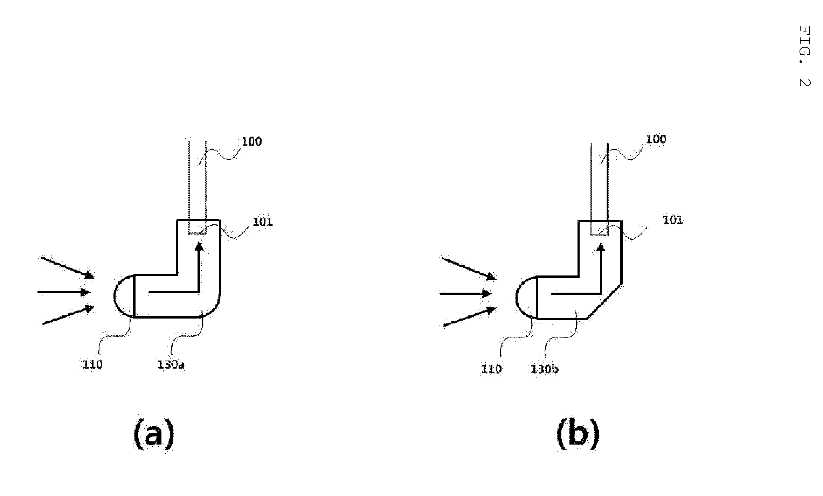

FIGS. 2A and 2B are diagrams schematically showing exemplary implementations of the optical path changing member 130. FIG. 2A shows an exemplary implementation of an optical path changing member 130a whose corner is formed into a curve, so that the optical path changing member 130a reflects light collected therein to change an optical path. FIG. 2B shows an exemplary implementation of an optical path changing member 130b whose corner is chamfered, so that the optical path changing member 130b reflects light collected therein to change an optical path.

The lighttight housing 300 blocks out external light, and the other end 102 and the sensor unit 200 are installed therein. In an exemplary embodiment, the other end 102 of the optical waveguide 100 is installed in the lighttight housing 300 to be attachable to and detachable from the lighttight housing 300. The ambient light and the infrared signal transmitted to the optical waveguide 100 are transmitted to the sensor unit 200 via the other end 102.

In an exemplary embodiment, a second lens 120 is optically connected to the other end 102 of the optical waveguide 100 and transmits the ambient light and the infrared signal provided from the optical waveguide 100 to the sensor unit 200. Also, the second lens 120 collects light emitted by a light-emitting device 230 and transmits the light to the one end 101.

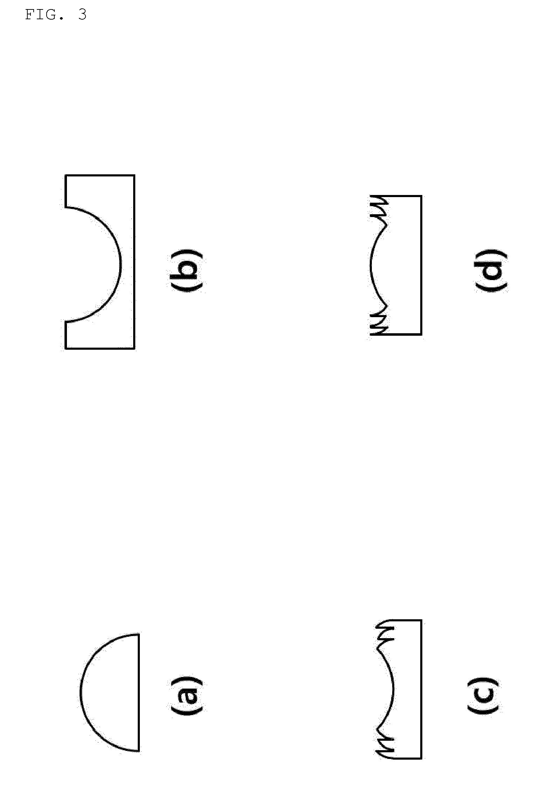

FIG. 3 schematically shows exemplary implementations of the second lens 120. The second lens 120 may be formed as a convex lens as shown in FIG. 3A, as a concave lens as shown in FIG. 3B, as a Fresnel lens that is a combined lens of a concave lens within a predetermined radius from the center of the combined lens and a convex lens outside the predetermined radius as shown in FIG. 3C, and as a combined lens of a convex lens within a predetermined radius and a concave lens outside the predetermined radius as shown in FIG. 3D.

By forming the second lens 120 as a convex lens, a concave lens, or a combined lens, the spectral performance is improved, so that the ambient light and the infrared signal collected by the first lens 110 may be uniformly irradiated to the infrared sensor 210 and the ambient light sensor 220. Also, the light-concentrating performance is improved, so that light emitted by the light-emitting device 230 may be transmitted to the first lens 110 and the amount of light emitted to the outside of the apparatus may be increased.

The sensor unit 200 includes the infrared sensor 210, the ambient light sensor 220, and the light-emitting device 230. The infrared sensor 210 detects an infrared signal having a wavelength band of 840 nm to 1000 nm and provided by the user and provides an electrical signal IR corresponding to the infrared signal to the controller 400, and the ambient light sensor 220 detects ambient light in the visible-light band and provides an electrical signal ALS corresponding to the ambient light to the controller 400. The light-emitting device 230 receives a light-emitting device drive signal LED from the controller 400 and provides light in the visible-light band.

In an exemplary embodiment, when the apparatus for transmitting and receiving light signals according to this exemplary embodiment is used in an image display device, such as a TV or a monitor, the sensor unit 200 is installed to be electrically connected to a video board that is one of main boards of the image display device. Accordingly, it is possible to reduce the width of a bezel of the image display device and the thickness of the image display device, and thus the image display device may be light and thin and may have a narrow bezel.

When the electrical signal IR corresponding to the infrared signal is received from the infrared sensor 210, the controller 400 provides the light-emitting device drive signal LED to the light-emitting device 230, thereby controlling the light-emitting device 230 to emit light. The light emitted by the light-emitting device 230 is collected through the second lens 120 and emitted to the outside through the optical waveguide 100 and the first lens 110, thereby notifying the user that the infrared signal has been received.

The controller 400 receives the electrical signal ALS corresponding to the ambient light from the ambient light sensor 220. In an exemplary embodiment, when the apparatus for transmitting and receiving light signals according to this exemplary embodiment is used in an image display device, such as a TV, if an environment including the image display device is bright, an image displayed by the image display device is necessary to be bright so that the user may clearly view the image. On the other hand, when the environment including the image display device is dark, even if an image displayed by the image display device is not bright, the user may clearly view the image, and low power is consumed. Therefore, the controller 400 may receive the electrical signal ALS from the ambient light sensor 220 to control the brightness of a displayed image according to ambient brightness.

The light-emitting device 230 generates light in the visible-light band as mentioned above, and the ambient light sensor 220 also generates light in the visible-light band. For this reason, when the light-emitting device 230 and the ambient light sensor 220 simultaneously operate, the ambient light sensor 220 may detect the light generated by the light-emitting device 230 and perform an unexpected operation. Therefore, the controller 400 separately operates in a period of obtaining the electrical signal ALS from the ambient light sensor 220 and a period of providing the control signal LED for causing the light-emitting device 230 to emit light.

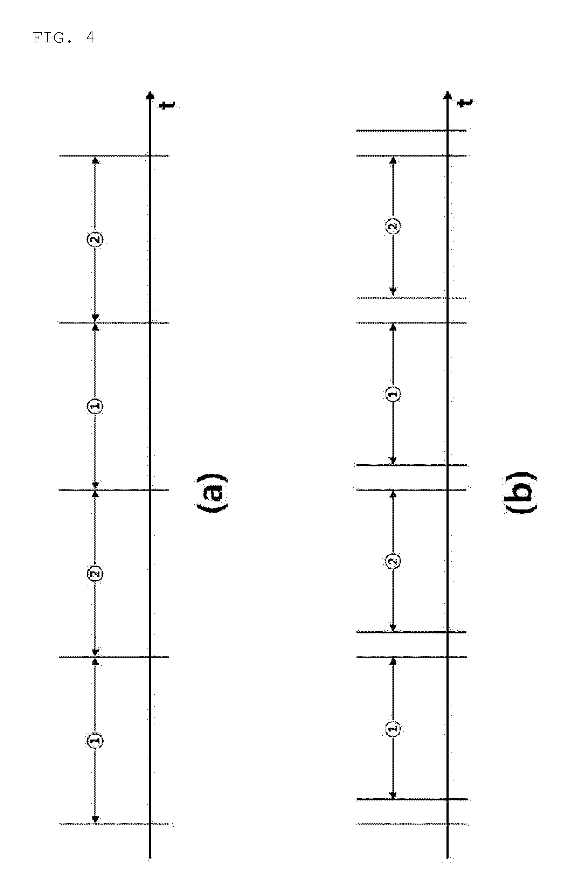

In an exemplary embodiment, the controller 400 operates so that a period ① of receiving an electrical signal from the ambient light sensor 220 and a period ② of

providing the control signal LED for controlling the light-emitting device 230 do not overlap as shown in FIG. 4A. In another exemplary embodiment, the controller 400 operates so that the period ① of receiving an electrical signal and the period ② of providing the control signal LED for controlling the light-emitting device 230 are repeated with a predetermined interval between consecutive periods as shown in FIG. 4B. Therefore, even when the wavelength band of light provided by the light-emitting device 230 is identical to the wavelength band of light sensed by the ambient light sensor 220, it is not a problem.

In an exemplary embodiment, even when the apparatus for transmitting and receiving light signals according to this exemplary embodiment is not in operation, if the controller 400 continuously receives an electrical signal from the ambient light sensor 220 and provides the control signal LED for controlling the light-emitting device 230, power may be unnecessarily wasted. Therefore, the controller 400 waits for the infrared sensor 210 to sense an infrared signal and to output the electrical signal IR corresponding to the infrared signal. In a period of waiting for the infrared sensor 210 to sense an infrared signal, the controller 400 does not wait for the electrical signal ALS output by the ambient light sensor 220 and control the light-emitting device 230 not to operate.

Using the apparatus for transmitting and receiving light signals according to this exemplary embodiment, it is possible to reduce the width of a bezel of an image display device, such as a TV or a monitor, and the thickness of the image display device. Also, it is possible to improve the appearance of the image display device and to enhance a purchase effect. Further, since a sensor unit is not embodied in the form of a printed circuit board (PCB) in a bezel but is embodied to be installed in a main board, it is unnecessary to additionally deploy a power line and a signal line, and manufacturing processes and manufacturing costs can be reduced.

As described above, according to exemplary embodiments of the present invention, a unit for collecting light and a unit for detecting a light signal to generate an electrical signal are not integrated into one body, so that both the units can be formed to have small thicknesses. Also, the units are spaced apart from each other, and it is possible to obtain a narrow bezel.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. An apparatus for transmitting and receiving light signals, the apparatus comprising:
an optical waveguide having one end and another end;
a sensor unit including an infrared sensor configured to detect an infrared signal and output an electrical signal corresponding to the infrared signal, an ambient light sensor configured to detect ambient light and output an electrical signal corresponding to the ambient light, and a light-emitting device;
a lighttight housing configured to block out external light, and in which the other end and the sensor unit are installed; and
a controller configured to receive an electrical signal output from at least one of the infrared sensor and the ambient light sensor and control the light-emitting device,
wherein the one end of the optical waveguide is optically connected to a first lens for collecting the ambient light and the infrared signal, so that the optical waveguide applies the collected ambient light and infrared signal to the sensor unit through the other end, and
the optical waveguide collects light emitted by the light-emitting device through the other end and provides the light to the one end to show the light emitted by the light-emitting device to an outside of the apparatus through the first lens.

2. The apparatus of claim 1, wherein the optical waveguide includes an optical fiber.

3. The apparatus of claim 1, further comprising an optical path changing member configured to change a path of the ambient light and the infrared signal collected by the first lens to provide the ambient light and the infrared signal to the one end, and receive the light generated by the light-emitting device and collected through the other end to provide the light to the first lens.

4. The apparatus of claim 1, wherein the lighttight housing is formed so that the other end is attachable to and detachable from the lighttight housing.

5. The apparatus of claim 1, further comprising a second lens interposed between the other end and the sensor unit.

6. The apparatus of claim 5, wherein the second lens is any one of a convex lens, a concave lens, and a combined lens of a convex lens and a concave lens.

7. The apparatus of claim 1, wherein the controller receives the electrical signal output by the infrared sensor detecting the infrared signal, and controls the light-emitting device to emit the light corresponding to the electrical signal.

8. The apparatus of claim 1, wherein, when the electrical signal output by the infrared sensor detecting the infrared signal is received, the controller receives the electrical signal from the ambient light sensor and controls the light-emitting device.

9. The apparatus of claim 1, wherein the controller causes a period of receiving the electrical signal from the ambient light sensor and a period of controlling the light-emitting device to emit light not to overlap each other.

10. The apparatus of claim 1, wherein the infrared signal has a wavelength of 840 nm to 1000 nm, and
the ambient light and the light emitted by the light-emitting device are in a visible-light band.

11. The apparatus of claim 1, wherein the sensor unit is installed to be electrically connected to a main board of a device including the apparatus.

12. The apparatus of claim 1, wherein the apparatus is used in an image display device.
